(19) Europäisches Patentamt / European Patent Office / Office européen des brevets

(11) EP 4 215 553 A1

(12) **EUROPEAN PATENT APPLICATION**
published in accordance with Art. 153(4) EPC

(43) Date of publication:
**26.07.2023 Bulletin 2023/30**

(21) Application number: **21868958.6**

(22) Date of filing: **08.06.2021**

(51) International Patent Classification (IPC):
***C08F 14/18** (2006.01)*

(52) Cooperative Patent Classification (CPC):
**C08F 14/18; C08F 214/18**

(86) International application number:
**PCT/JP2021/021764**

(87) International publication number:
**WO 2022/059271 (24.03.2022 Gazette 2022/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.09.2020 JP 2020155950**

(71) Applicant: **DAIKIN INDUSTRIES, LTD.**
**Osaka-shi, Osaka 530-0001 (JP)**

(72) Inventors:
- **YOTSUMOTO, Yuuki**
  **Osaka-shi, Osaka 530-8323 (JP)**
- **YANO, Ryouichi**
  **Osaka-shi, Osaka 530-8323 (JP)**
- **FURUTANI, Takahiro**
  **Osaka-shi, Osaka 530-8323 (JP)**

(74) Representative: **Hoffmann Eitle**
**Patent- und Rechtsanwälte PartmbB**
**Arabellastraße 30**
**81925 München (DE)**

(54) **FLUORINE-CONTAINING POLYMER AND METHOD FOR MANUFACTURING SAME**

(57) Provided are a novel polymer having a structure derived from 1,2-difluoroethylene, and a production method thereof. A fluorine-containing polymer comprising a structural unit represented by a following general formula (1) partly or as a whole, and having a glass transition temperature of 100°C or more.

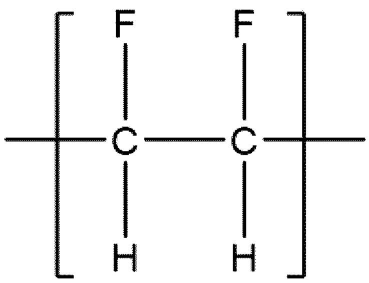

(1)

EP 4 215 553 A1

## Description

Technical Field

The present disclosure relates to a fluorine-containing polymer and a production method thereof.

Background Art

A fluorine-containing polymer is a polymer used in quite a number of fields. As monomers for use in production of such a polymer, tetrafluoroethylene, vinylidene fluoride, hexafluoropropylene, etc. are well known.

A production method of 1,2-difluoroethylene is disclosed in Patent Literature 1. Further, the compounds and a polymer made from the same are disclosed in Non Patent Literature 1.

Citation List

Patent Literature

Patent Literature 1: International Publication No. WO 2019216239

Non Patent Literature

Non Patent Literature 1: Poly(vinylene fluoride), Synthesis and Properties, W. S. Durrell et. al. Journal of Polymer Science: Part A, Vol. 3, P. 2975-2982 (1965)

Summary of Invention

Technical Problem

An object of the present disclosure is to provide a novel polymer having a structure derived from 1,2-difluoroethylene, and a production method thereof.

Solution to problem

The present disclosure relates to a fluorine-containing polymer comprising a structural unit represented by a following general formula (1) partly or as a whole, wherein the fluorine-containing polymer has a glass transition temperature of 100°C or more.

[Chemical Formula 1]

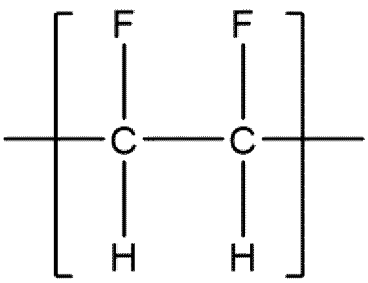

(1)

It is preferable that the fluorine-containing polymer has a weight average molecular weight of 5,000 to 5,000,000.

The present disclosure also relates to a fluorine-containing polymer comprising a structural unit represented by a following general formula (1) and a structural unit represented by a following general formula (2):

[Chemical Formula 2]

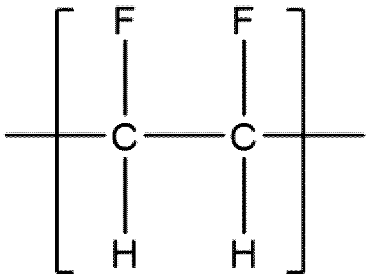

(1)

[Chemical Formula 3]

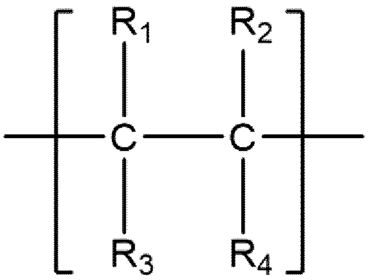

(2)

wherein $R_1$ is hydrogen, fluorine, a partly or wholly fluorinated hydrocarbon group having 5 or less carbon atoms, or an $OR_5$ group, wherein the $R_5$ group is a partly or wholly fluorinated hydrocarbon group having 5 or less carbon atoms, and $R_2$, $R_3$ and $R_4$ are each independently hydrogen or fluorine.

It is preferable that the structural unit represented by the general formula (2) is at least one structural unit selected from the group consisting of structural units represented by following general formulas (3) to (8):

[Chemical Formula 4]

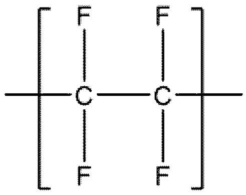

(3)

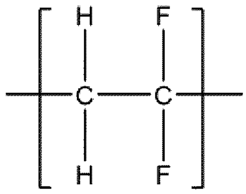

(4)

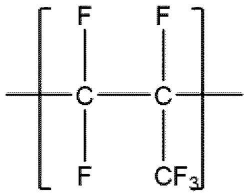

(5)

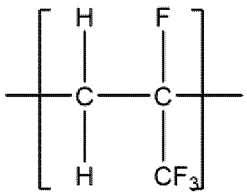

(6)

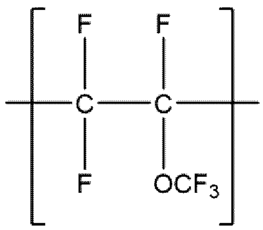

(7)

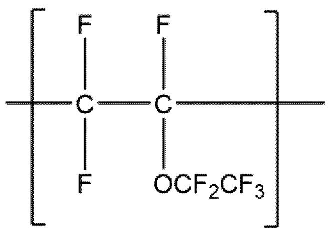

(8)

It is preferable that the fluorine-containing polymer has a weight average molecular weight of 5,000 to 5,000,000.

The present disclosure also relates to a fluorine-containing polymer comprising a structural unit represented by a following general formula (1) partly or as a whole:

[Chemical Formula 5]

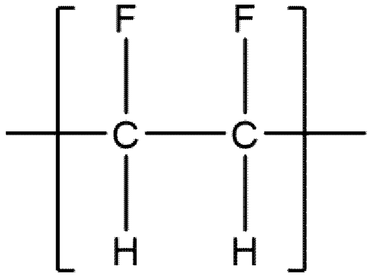

(1)

wherein the fluorine-containing polymer is amorphous.

The amorphous fluorine-containing polymer preferably comprises a structural unit represented by the general formula (1) and a structural unit derived from hexafluoropropylene, and has a glass transition temperature of 35°C or more.

The amorphous fluorine-containing polymer preferably has a proportion of the structural unit represented by the general formula (1) of 70 to 92 mol%.

The amorphous fluorine-containing polymer preferably comprises a structural unit represented by the general formula (1) and a structural unit derived from at least an unsaturated compound selected from the group consisting of Ashrae Nos. 1225, 1234, 1243 and 1252 including isomers, and has a glass transition temperature of 35°C or more.

The amorphous fluorine-containing polymer preferably has a proportion of the structural unit represented by the general formula (1) of 0.1 to 92 mol%.

The amorphous fluorine-containing polymer preferably comprises a structural unit represented by the general formula (1) and a structural unit represented by a following general formula (20):

[Chemical Formula 6]

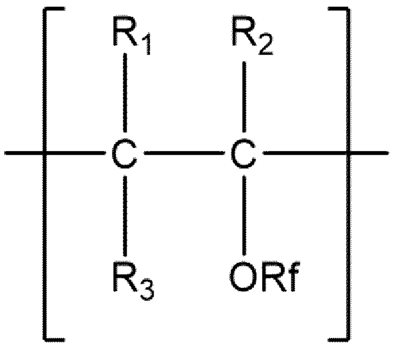

(20)

wherein $R_1$ to $R_3$ are selected from H and F, and Rf is a fluorine-containing alkyl group having 1 to 6 carbon atoms, and has a glass transition temperature of 35°C or more.

The structural unit represented by the general formula (20) is preferably at least one of structural units represented by following general formulas (7) to (9):

[Chemical Formula 7]

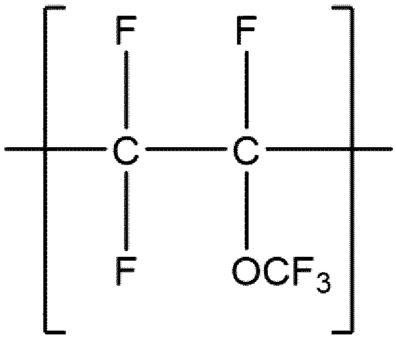

(7)

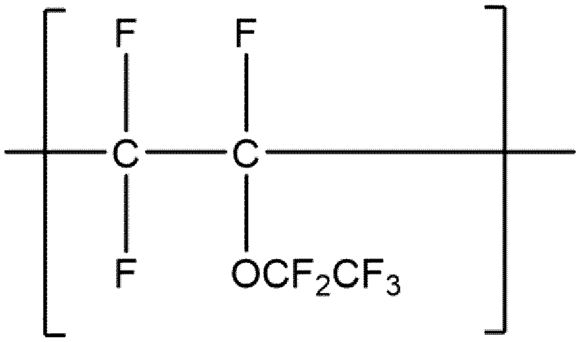

(8)

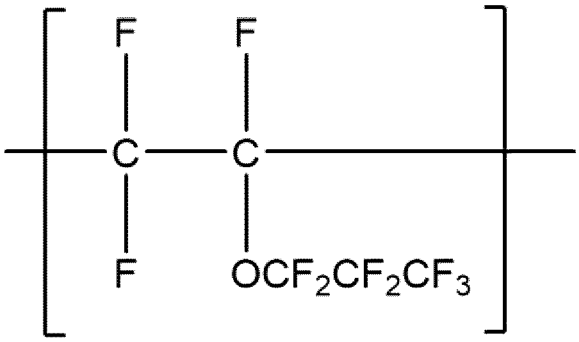

(9)

The amorphous fluorine-containing polymer preferably has a proportion of the structural unit represented by the general formula (1) of 70 to 92 mol%. The present disclosure also relates to a resin solution comprising any of the above-mentioned polymers which is dissolved in a general-purpose solvent.

The present disclosure also relates to a production method of the above-mentioned fluorine-containing polymer comprising: polymerizing a monomer composition including a monomer represented by a following general formula (10) partly or as a whole.

[Chemical Formula 8]

$$FHC=CHF \qquad (10)$$

Advantageous Effects of Invention

The polymer of the present disclosure has specific structural units and may be a homopolymer or a copolymer. The polymer is easily copolymerized with another fluorine-based monomer at a wide variety of polymerization ratios, so that polymers having various properties can be obtained. A first polymer of the present disclosure is a novel polymer having high glass transition temperature, having solubility in a general-purpose organic solvent, which is advantageous. A second polymer of the present disclosure is a novel polymer which is a copolymer obtained by copolymerizing 1,2-difluoroethylene with another monomer at an optional ratio. Various physical properties of such a polymer may be changed with the polymerization ratio thereof. For example, a resin excellent in chemical resistance, a polymer having solubility in a general-purpose organic solvent, etc. can be obtained. A third polymer of the present disclosure is a novel polymer which is amorphous and has a solubility in a general-purpose organic solvent, which is advantageous.

Description of Embodiment

Hereinafter, the present disclosure will be described in detail. The present disclosure relates to a homopolymer or a copolymer having a structure represented by a following general formula (1):

[Chemical Formula 9]

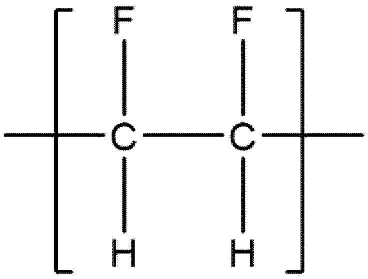

(1)

The structure represented by the general formula (1) is a structure obtained through polymerization using a compound having a structure represented by a following general formula (10) as monomer:

[Chemical Formula 10]

$$FHC=CHF \qquad (10)$$

Although the compound represented by the general formula (10) is a known compound of which use as refrigerant has been conventionally studied, almost no study on use as a polymerization monomer has been performed.

A polymer having a structural unit represented by the general formula (1) allows to make a resin having a high Tg of 100°C or more. Taking advantage of such properties, use in applications different from those of polymers having a low Tg such as polyvinylidene fluoride can be expected.

Further, a copolymer with another monomer can be obtained by a commonly used method. Further, the copolymerization proportion thereof can be easily changed. By such a method, use as a copolymerization component for adjusting various physical properties of a resin can be achieved. For example, in the case of copolymerization with tetrafluoroethylene, 1,2-difluoroethylene as copolymerization component may be introduced at any proportion. Thereby, the properties of the resin such as melting point, degree of crystallinity, etc. may be appropriately adjusted.

Although the copolymer of the present disclosure is generally excellent in solubility in a general-purpose solvent, a resin insoluble in a general-purpose solvent may be obtained depending on the composition of the copolymer. For example, copolymerization of tetrafluoroethylene, vinylidene fluoride, etc. with 1,2-difluoroethylene at a low copolymerization proportion corresponds to the case. Such a polymer have an effect of adjusting properties of a resin without impairing effects such as chemical resistance inherent to polytetrafluoroethylene, polyvinylidene fluoride, etc., though not having an effect of solubility in a general-purpose solvent.

Further, the polymer of the present disclosure can be dissolved in a general-purpose organic solvent such as acetone. Commonly used known fluorine-containing polymers are not dissolved in a general-purpose organic solvent. In contrast, the polymer of the present disclosure can be made soluble in a general-purpose organic solvent, so that the polymer can be used even in applications where use of a general-purpose organic solvent is required from the viewpoint of cost, etc.

Further, the polymer of the present disclosure can be made into a copolymer as amorphous polymer. Such an amorphous fluorine-containing polymer has excellent performance in transparency, coating properties, adhesiveness, etc., so that particularly favorable use can be achieved in applications that require such performance.

In Non Patent Literature 1, a polymer obtained by a polymerization reaction using a monomer represented by the general formula (10) or a monomer composition containing the same as raw material is disclosed. However, according to the Non Patent Literature 1, the glass transition temperature of the polymer is about 50°C. In contrast, the present disclosers have found that the homopolymer having a structure represented by the general formula (1) obtained by producing a monomer with a high purity and polymerizing the monomer has a glass transition temperature of 100°C or more. Since the polymer according to Non Patent Literature 1 has a glass transition temperature of about 50°C, it is clear that the same polymer as in the present disclosure have not been obtained. The polymer according to Non Patent Literature 1 is definitely different from the polymer of the present disclosure.

According to Non Patent Literature 1, a polymer having high purity cannot be obtained. Accordingly, a similar polymer as in the present disclosure cannot be obtained. According to the study by the present inventors, synthesis of a compound represented by the general formula (10) by the synthesis method in Non Patent Literature 1 generates various impurities such as vinylidene fluoride. Further, in Non Patent Literature 1, the precursor has a purity of 90%, so that a component derived from the impurities in the precursor is also generated. According to Non Patent Literature 1, the impurities are removed by a dry ice trap (-78°C). However, high-boiling point compounds cannot be removed by such a method. As described above, according to Non Patent Literature 1, the glass transition temperature of the polymer is about 50°C. In consideration of the description, a high-purity monomer cannot be obtained in Non Patent Literature 1, so that a polymer having a glass transition temperature of 100°C or more is not disclosed.

As shown in the following synthesis example, in the case where a polymer having a monomer represented by the general formula (10) as main component contains vinylidene fluoride in an amount of only 3.5%, Tg decreases to 86°C. Even with use of a precursor having a purity of 90% or more, a monomer produced by the method according to the prior literature generates byproducts such as VDF and 1122 in amount of 35% or more. Accordingly, it is preferable that a high-purity monomer be used to make a polymer 1. Further, it is also preferable that a high-purity monomer be used to make a polymer 2, because a stable composition can be obtained and a polymer having given physical properties can be stably obtained.

Further, in the case where the fluorine-containing polymer of the present disclosure is a following polymer 2 or polymer 3, a monomer represented by the general formula (10) having low purity may cause difficulties in introducing a copolymerization component into a resin. In other words, a monomer may be contained in the polymer only at a low proportion corresponding to an amount charged or less. In contrast, it is preferable to use a monomer having high purity, because a copolymerization component can be easily introduced into a resin.

The fluorine-containing polymer of the present disclosure may be amorphous as described above. In this case, a copolymerization component at a specific proportion is required to be introduced into the polymer. In order to achieve the object, it is preferable to use a monomer having high purity as raw material.

In consideration of the above, in the present disclosure, it is preferable that any of the following polymers 1 to 3 be obtained with use of a compound represented by the general formula (10) having a monomer purity of 99.5 mass% or more, more preferably 99.8 mass% or more, and most preferably 99.9 mass% or more, as raw material.

The polymer of the present disclosure has a structural unit represented by the general formula (1), and more specifically includes the following three polymers:

(Polymer 1) comprising a structural unit represented by the general formula (1), having a glass transition temperature of 100°C or more.

(Polymer 2) comprising a structural unit represented by the general formula (1) and a structural unit represented by a following general formula (2), and

(Polymer 3) comprising a structural unit represented by the general formula (1), being amorphous.

Incidentally, there exists a polymer satisfying a plurality of conditions for the three polymers, which is included in the present disclosure.

For example, an amorphous polymer 1, an amorphous polymer 2, and a polymer 2 having a glass transition

temperature of 100°C or more are also included as target objects in the present disclosure. Each of these is described in detail as follows.

(Polymer 1)

The polymer 1 of the present disclosure is a polymer having a structure represented by the general formula (1), with a glass transition temperature of 100°C or more. In other words, the polymer 1 means a polymer including a structure represented by the formula (1) alone, or a copolymer having a structural unit represented by the general formula (1), with a glass transition temperature of 100°C or more.
Incidentally, the glass transition temperature in the present specification is a value measured by DSC under conditions shown in Examples.
The upper limit of the glass transition temperature is not limited, being more preferably 200°C or less, still more preferably 150°C or less.
The polymer 1 of the present disclosure can be obtained by polymerizing the monomer represented by the general formula (10) or polymerizing a monomer composition including the monomer represented by the general formula (10) as essential component.
The monomer represented by the general formula (10) include a trans form (E-form) and a cis form (Z-form).

[Chemical Formula 11]

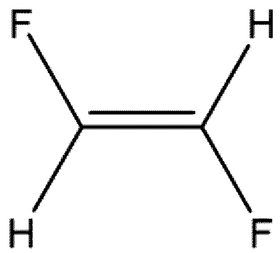

trans

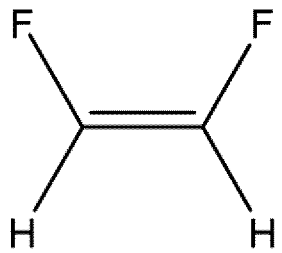

cis

Accordingly, the steric configuration is different depending on the case of using the trans form alone as raw material, the case of using the cis form alone as raw material, and the case of using a mixture thereof as raw material. The polymer 1 of the present disclosure may be any one thereof, as long as the glass transition temperature is 100°C or more. Alternatively, the polymer 1 may be a mixture thereof at any proportion.
The polymer 1 of the present disclosure may be a polymer including a structure represented by the general formula (1) alone, or may be a copolymer including another monomer in combination. Since the type and amount of the copolymer used affect the glass transition temperature, the use thereof is determined in consideration of the glass transition temperature.
Incidentally, the polymer 1 including the structural unit represented by the general formula (1) alone has a glass transition temperature in the range of 100 to 150°C, with a slight difference depending on the presence proportion of the cis form and trans form in the raw material monomer.
The polymer 1 of the present disclosure may be a homopolymer or may include a copolymerization component as long as the glass transition temperature is 100°C or more. In the case of a homopolymer, it is preferable that the structural unit represented by the general formula (1) is contained at a proportion of 99.5 mol% or more. The content of the structural unit is more preferably 99.8 mol% or more, and most preferably 99.9 mol% or more.
The polymer 1 of the present disclosure may be a copolymer having a structural unit derived from the copolymerization component as long as the glass transition temperature is 100°C or more. The copolymerization component used in combination in the polymer 1 of the present disclosure is not limited, and preferred examples of the other monomers include at least one selected from the group consisting of tetrafluoroethylene (TFE), hexafluoropropylene (HFP), perfluoro(methyl vinyl ether), perfluoro(ethyl vinyl ether), perfluoro(propyl vinyl ether), chlorotrifluoroethylene, trifluoroethylene, hexafluoroisobutene, vinyl fluoride, ethylene, propylene and alkyl vinyl ether.
The amount of the copolymerization component used in the polymer 1 of the present disclosure is not limited, preferably 99 mol% or less, more preferably 98 mol% or less, and most preferably 95 mol% or less.
The polymer 1 of the present disclosure has a ratio F/H in the polymer of preferably 50% (molar ratio) or more.

With a molar ratio of less than 50%, the thermal decomposition temperature decreases, so that a gas is generated during molding the resin into a film, tube or the like, which may cause difficulties in molding. Further, the thermal decomposition causes undesirable coloring of the resin. The lower limit of the ratio F/H is more preferably 50% or more, still more preferably 55% or more. The upper limit of the ratio F/H is more preferably 95% (molar ratio), still more preferably 90%, and most preferably 80%.

The polymer 1 of the present disclosure has a weight average molecular weight of preferably 5,000 to 5,000,000. Within the range, preferred resistance to thermal decomposition and preferred molding can be achieved. The upper limit thereof is more preferably 3,000,000, still more preferably 2,000,000. The lower limit thereof is more preferably 8,000, still more preferably 10,000. The weight average molecular weight of the present disclosure is a value measured by gel permeation chromatography (GPC).

The polymer 1 of the present disclosure has an advantage of capable of being dissolved in a general-purpose solvent. A known fluorine-based polymer is hardly dissolved in a general-purpose solvent, and for use as resin solution, dissolution in a special solvent particularly excellent in dissolubility has been required. As a result, a problem of cost increase has been caused due to use of an expensive solvent. Having excellent solubility in a general-purpose solvent, the polymer 1 of the present disclosure is particularly preferred from the viewpoint of cost. Examples of the general-purpose solvent that can dissolve the polymer 1 of the present disclosure include acetone, methyl ethyl ketone, tetrahydrofuran, and N,N-dimethylformamide.

The resin solution including the polymer 1 of the present disclosure dissolved in a general-purpose solvent preferably has a resin concentration of 1.0 to 10.0 mass%. The lower limit of the resin concentration is more preferably 2.0 mass%, still more preferably 2.5 mass%. The upper limit of the resin concentration is more preferably 9.0 mass%, still more preferably 8.0 mass%.

(Polymer 2)

The polymer 2 comprises a structural unit represented by a following general formula (2) in addition to the structural unit represented by the general formula (1).

[Chemical Formula 12]

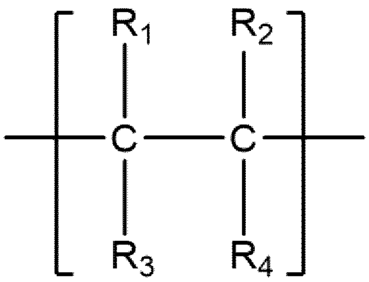

(2)

wherein $R_1$ is hydrogen, fluorine, a partly or wholly fluorinated hydrocarbon group having 5 or less carbon atoms, or $OR_5$ group, wherein $R_5$ group is a partly or wholly fluorinated hydrocarbon group having 5 or less carbon atoms; $R_2$, $R_3$ and $R_4$ are each independently hydrogen or fluorine.

Examples of the structural unit represented by the general formula (2) include a structure derived from an ethylene-based monomer of which at least one hydrogen atom may be substituted with fluorine, a structure derived from a propylene-based monomer of which at least one hydrogen atom may be substituted with fluorine, a structure derived from a butene-based monomer of which at least one hydrogen atom may be substituted with fluorine, and a structure derived from a pentene-based monomer of which at least one hydrogen atom may be substituted with fluorine. The fluorine-containing polymer of the present disclosure may include two or more copolymerization structural units in combination.

Specific examples of the structure derived from an ethylene-based monomer of which at least one hydrogen atom may be substituted with fluorine include ethylene, vinylidene fluoride, tetrafluoroethylene, vinyl fluoride, and 1,1,2-trifluoroethylene.

Specific examples of the structural unit derived from a propylene monomer of which at least one hydrogen atom may be substituted with fluorine include 1270, 1261, 1252, 1243, 1234 and 1225. Specific examples of the structural unit derived from a butene-based monomer of which at least one hydrogen atom may be substituted with fluorine include 1390, 1381, 1372, 1363, 1354, 1345, 1336, 1327 and 1318. Specific examples of the structure derived from a pentene-based monomer of which at least one hydrogen atom may be substituted with fluorine include R600, R600a, nonahydrofluoropentene, 1492, 1483, 1474, 1465, 1456, 1447, 1438, 1429 and perfluoropentene. Incidentally, all the numbers are Ashrae numbers.

As the structural unit derived from a propylene-based monomer of which at least one hydrogen atom may be substituted with fluorine, Ashrae Nos. 1216 (hexafluoropropylene), 1225, 1234, 1243 and 1252 are particularly preferred. Preferred examples of the structural unit include ones represented by following general formulas (11) to (16).

[Chemical Formula 13]

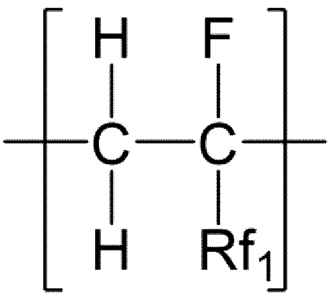

(11)

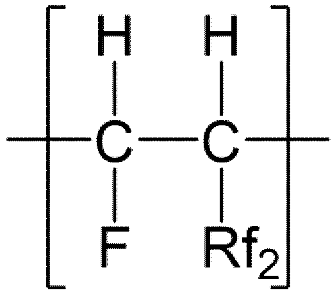

(12)

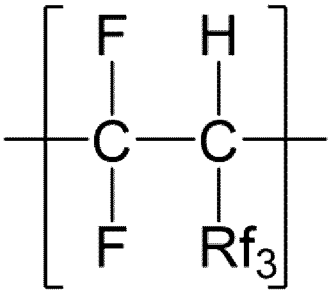

(13)

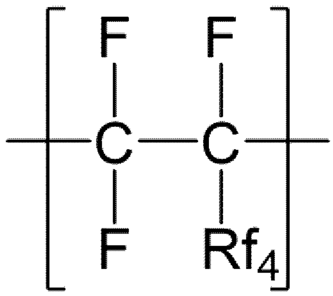

(14)

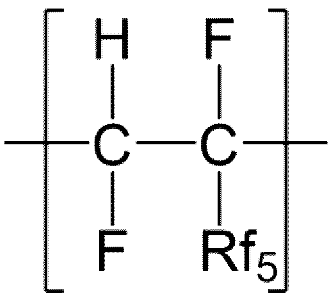

(15)

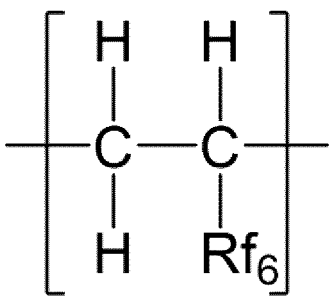

(16)

wherein Rfi to $Rf_6$ represent a fluoromethyl group having 1 to 3 fluorine atoms.

Specific examples of the compound that gives a structure represented by the general formula include 2,3,3,3-tetrafluoropropene (HFO-1234yf), (Z or E-)1,3,3,3-tetrafluoropropene (HFO-1234ze), (Z or E-)1,2,3,3,3-pentafluoropropene (HFO-1225ye), (Z or E-)1,1,3,3,3-pentafluoropropene (HFO-1225zc), and (Z or E-)3,3,3-trifluoropropene (HFO-1243zf).

The structural unit represented by the general formula (2) may be:

[Chemical Formula 14]

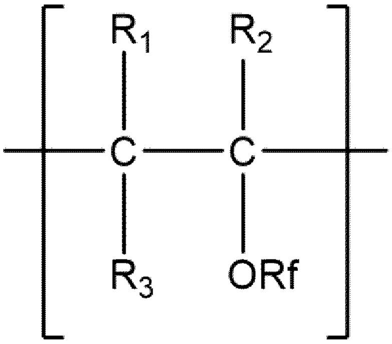

(20)

wherein $R_1$ to $R_3$ are selected from H and F, and Rf is a fluorine-containing alkyl group having 1 to 6 carbon atoms.

The structural unit represented by the general formula (20) is a structural unit derived from a fluorinated vinyl ether compound. The fluorinated vinyl ether compound is not limited, and examples thereof include perfluoromethyl vinyl ether (following general formula (7)), perfluoroethyl vinyl ether (following general formula (8)), and perfluoropropyl vinyl ether (following general formula (9)).

[Chemical Formula 15]

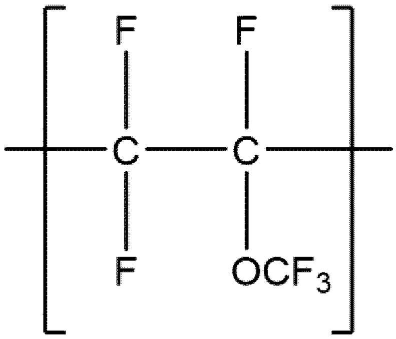

(7)

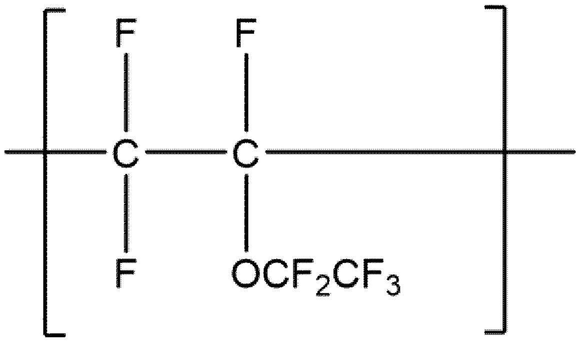

(8)

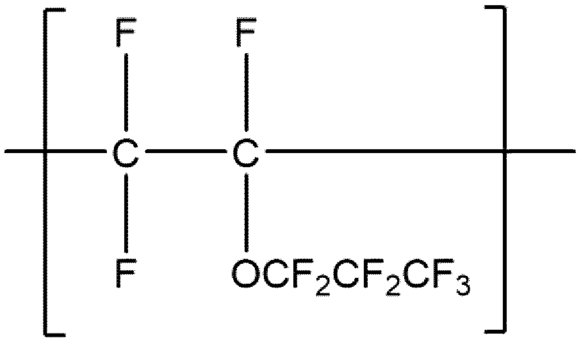

(9)

In the polymer (B) of the present disclosure, examples of the structural unit that can be suitably used among the structural units represented by the general formula (2) include structural units represented by following general formulas (3) to (8).

[Chemical Formula 16]

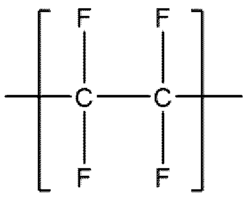
(3)

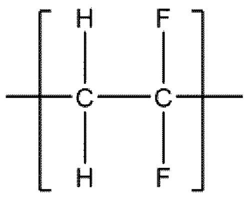
(4)

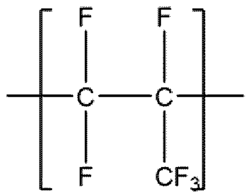
(5)

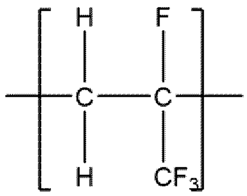
(6)

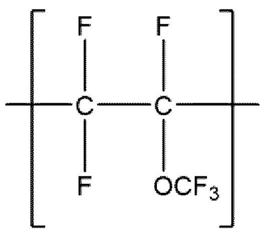
(7)

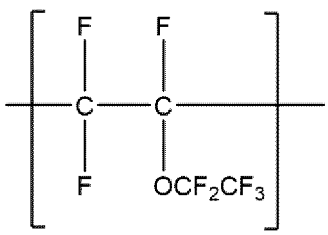
(8)

The structure represented by the general formula (3) is a structural unit derived from tetrafluoroethylene, and the structure represented by the general formula (4) is a structural unit derived from vinylidene fluoride. Further, the structure represented by the general formula (5) is a structural unit derived from perfluorovinyl methyl ether, or a structural unit derived from $CH_2$=$CFCF_3$. The structure represented by the general formula (6) is a structural unit derived from hexafluoropropylene. The structure represented by the general formula (7) is a structural unit derived from perfluoro(methyl vinyl ether). The structure represented by the general formula (8) is a structural unit derived from perfluoro(ethyl vinyl ether).

These are compounds known as fluorine-containing monomers. The polymer 2 of the present disclosure is a polymer which includes a general-purpose fluorine resin such as polytetrafluoroethylene and polyvinylidene fluoride made from these compounds, having a structure represented by the general formula (1) as copolymerization component, or a polymer having a structure represented by the general formula (1) as main skeleton, modified with the structural unit represented by the general formula (2).

The glass transition temperature of these polymers 2 is not limited, and may be less than 100°C. The glass transition temperature of the polymer 2 is preferably -20 to 99.9°C.

It is preferable that the polymer 2 of the present disclosure have a structural unit represented by the general formula (1) and/or a structural unit represented by the general formula (2), at a proportion of 1 to 99 mol%. Controlling to the range is preferred, because the degree of crystallinity can be adjusted to any value. The lower limit is more preferably 2 mol%, still more preferably 5 mol%. The upper limit is more preferably 98 mol%, still more preferably 95 mol%.

The polymer 2 of the present disclosure may be one further having a structural unit derived from a copolymerization component other than the structural unit represented by the general formula (2). The copolymerization component is not limited, and examples thereof include chlorotrifluoroethylene and hexafluoroisobutene.

The amount of the copolymerization component other than the structural unit represented by the general formula (2) used is not limited, more preferably 99 mol% or less, still more preferably 98 mol% or less, and most preferably 95 mol% or less.

It is preferable that the polymer 2 of the present disclosure have a ratio F/H in the polymer of 50% (molar ratio) or more. With a ratio F/H of less than 50%, the thermal decomposition temperature decreases, so that gas is generated during molding of the resin into a film or tube, which may result in difficulty in molding. Further, the thermal decomposition causes undesirable coloring. The lower limit of the ratio F/H is more preferably 50% or more, still more preferably 55% or more. The upper limit of the ratio F/H is more preferably 95% (molar ratio), still more preferably 90%, and most preferably 80%.

The polymer 2 of the present disclosure preferably has a weight average molecular weight of 5,000 to 5,000,000. With a weight average molecular weight in the range, preferred thermal decomposition resistance and molding processability are obtained. The upper limit is more preferably 3,000,000, still more preferably 2,000,000. The lower limit is more preferably 8,000, still more preferably 10,000.

The polymer 2 of the present disclosure can be made soluble in a general-purpose solvent. As described above, the polymer having a structural unit represented by the general formula (1) has solubility in a general-purpose solvent. Accordingly, the polymer 2 made to contain a structural unit represented by the formula (1) at a high proportion can be dissolved in a general-purpose solvent. The general-purpose solvent is not limited, and examples thereof include acetone, methyl ethyl ketone, tetrahydrofuran, methyl isobutyl ketone, N,N-dimethylformamide, and N-methyl-2-pyrolidone.

In the case where the polymer 2 of the present disclosure is dissolved in a general-purpose solvent to make a resin solution, the resin concentration is preferably controlled to 1.0 to 10.0 mass%. The lower limit of the resin concentration is more preferably 2.0 mass%, still more preferably 2.5 mass%. The upper limit of the resin concentration is more preferably 9.0 mass%, still more preferably 8.0 mass%.

(Polymer 3)

Alternatively, the polymer having a structure represented by the general formula (1) may be made into an amorphous polymer through adjustment of the composition.

In the present disclosure, being "amorphous" means the degree of crystallinity calculated by X-ray crystal diffraction according to the measurement method described in Examples is 0.5% or less. Incidentally, the measurement conditions in the method are conditions as described in following Examples. The degree of crystallinity is more preferably 0%.

It is preferable that the amorphous fluorine-containing polymer of the present disclosure have a glass transition temperature of 35°C or more. The glass transition temperature is more preferably 40°C or more, still more preferably 50°C or more.

The amorphous fluorine-containing polymer of the present disclosure has a chemical structure represented by the general formula (1) and a structure derived from a copolymer component, and the crystallinity thereof can be reduced by type of the structure derived from the copolymer component used in combination, and the amount of the copolymer component used.

Incidentally, the polymer 3 may have properties in combination with those of the polymer 1 and/or the polymer 2 as described above. Specific compositions of the amorphous fluorine-containing polymer are described as examples below. Incidentally, the polymer 3 is not limited to following polymers (A) to (C), as long as it satisfies the requirements described above.

(Amorphous fluorine-containing polymer having structural unit represented by general formula (1) and structural unit derived from hexafluoropropylene, with glass transition temperature of 35°C or more)

An amorphous fluorine-containing polymer may include hexafluoropropylene as copolymer component. In this case, the glass transition temperature is 35°C or more. Hereinafter, such a polymer is referred to as polymer (A).

The polymer (A) has excellent performance as an amorphous fluorine-containing polymer. In the various applications described in detail below, the glass transition temperature is required to be 35°C or more, and the polymer (A) has excellent performance to meet the requirements for the applications.

It is preferable that the polymer (A) contain a structural unit represented by the general formula (1) at a proportion of 86 to 90 mol% relative to the total amount of the polymer. The lower limit is more preferably 87 mol%.

It is preferable that the polymer (A) contain a structural unit derived from hexafluoropropylene at a proportion of 8.0 to 30.0 mol%. The lower limit is preferably 10.0 mol%, and the upper limit is preferably 20.0 mol%.

The polymer (A) may be a polymer further having a structural unit (A) other than the structural unit represented by the general formula (1) and the structural unit derived from hexafluoropropylene, within a range not impairing the effects of the invention. The other structural unit (A) is contained at a proportion of preferably 90 mol% or less relative to the total amount of the polymer, while the other structural unit (A) may not be contained in the polymer which includes a structural unit represented by the general formula (1) and a structural unit derived from hexafluoropropylene only.

The other structural unit (A) is not limited, and any unsaturated polymerizable monomer that can be copolymerized may be used. Examples thereof include structural units derived from the compounds represented by the general formula (2) other than hexafluoropropylene, and chlorotrifluoroethylene, ethylene, propylene, alkyl vinyl ether, etc.

The polymer (A) as the polymer described above has a glass transition temperature of 35°C or more. The polymer (A) made to have such a glass transition temperature is preferred, because properties suitable for use in various applications to be described in detail below can be obtained.

(Amorphous fluorine-containing polymer having copolymer including structural unit represented by general formula (1) and structural unit derived from at least an unsaturated compound selected from group consisting of 1225, 1234, 1243 and 1252, with glass transition temperature of 35°C or more)

Such an amorphous fluorine-containing polymer is referred to as polymer (B).

In the polymer (B), "1225, 1234, 1243 and 1252" mean structures represented by Ashrae numbers, specifically being preferably at least one copolymerization unit selected from the group of monomer units having a structure represented by any of following general formulas (11) to (16) .

[Chemical Formula 17]

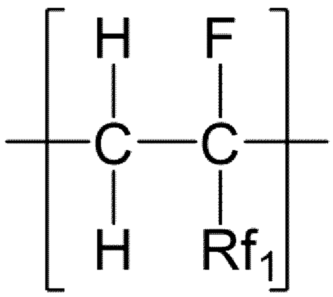

(11)

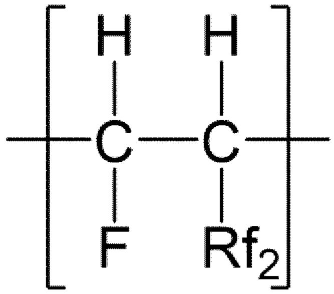

(12)

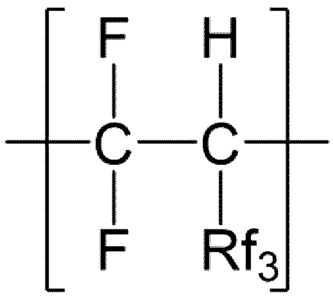

(13)

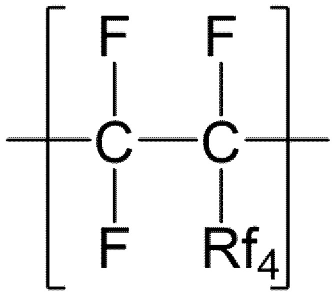

(14)

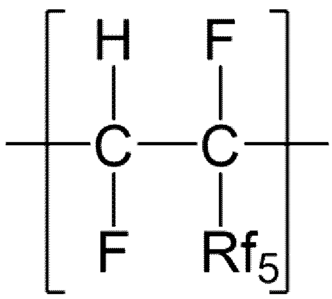

(15)

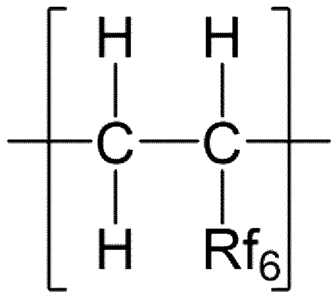

(16)

wherein Rfi to $Rf_6$ represent a fluoromethyl group having 1 to 3 fluorine atoms.

Specific examples of the compound that gives the structure represented by the general formula include 2,3,3,3-tetrafluoropropene (HFO-1234yf), (Z or E-)1,3,3,3-tetrafluoropropene (HFO-1234ze), (Z or E-)1,2,3,3,3-pentafluoropropene (HFO-1225ye), (Z or E-)1,1,3,3,3-pentafluoropropene (HFO-1225zc), and (Z or E-)3,3,3-trifluoropropene (HFO-1243zf).

It is preferable that the polymer (B) contain a structural unit represented by the formula (1) at a proportion of

0.1 to 90 mol% relative to the total amount of the polymer.

It is preferable that the polymer (B) contain a structural unit derived from at least an unsaturated compound selected from the group consisting of 1225, 1234, 1243 and 1252 at a proportion of 8.0 to 99.9 mol% relative to the total amount of the polymer. The lower limit is preferably 10.0 mal%.

Further, the polymer (B) may be a polymer having another structural unit other than the structural unit represented by the general formula (1) and the structural unit derived from "1225, 1234, 1243 and 1252", within a range not impairing the effect of the invention. The other structural unit (B) is contained at a proportion of preferably 90 mol% or less relative to the total amount of the polymer, while the other structural unit (A) may not be contained in the polymer which includes a structural unit represented by the general formula (1) and a structural unit derived from "1225, 1234, 1243 and 1252" only.

The other structural unit (B) is not limited, and any unsaturated polymerizable monomer that can be copolymerized may be used. Examples thereof include a structure derived from a compound represented by the general formula (2) other than hexafluoropropylene, and chlorotrifluoroethylene, ethylene, propylene, alkyl vinyl ether, etc.

The polymer (B) as the polymer described above has a glass transition temperature of 35°C or more. The polymer (B) made to have such a glass transition temperature is preferred, because properties suitable for use in various applications to be described in detail below can be obtained.

(Amorphous fluorine-containing polymer having structural unit represented by general formula (1) and structural unit represented by general formula (20), having glass transition temperature of 35°C or more)

Such an amorphous fluorine-containing polymer is referred to as polymer (C).

The structural unit represented by the general formula (20) is:

[Chemical Formula 18]

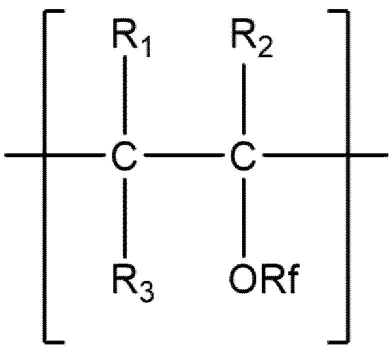

(20)

wherein $R_1$ to $R_3$ are selected from H and F, and Rf is a fluorine-containing alkyl group having 1 to 6 carbon atoms.

The structural unit represented by the general formula (20) is a structural unit derived from a fluorinated vinyl ether compound. The fluorinated vinyl ether compound is not limited, and examples thereof include perfluoromethyl vinyl ether and perfluoropropyl vinyl ether.

Although such a structural unit of fluorinated vinyl ether compound is not limited, for example, at least one selected from the structural units represented by following general formulas (7) to (9) is preferred.

[Chemical Formula 19]

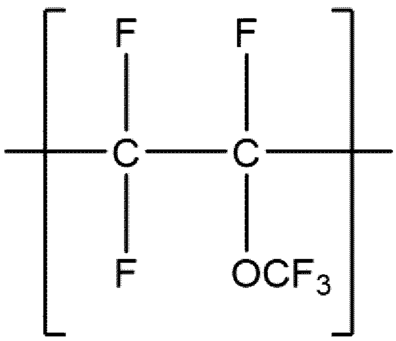

(7)

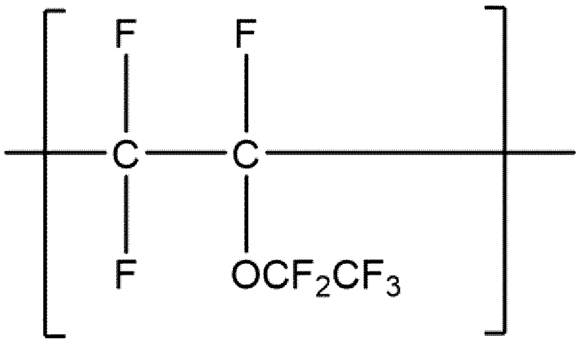

(8)

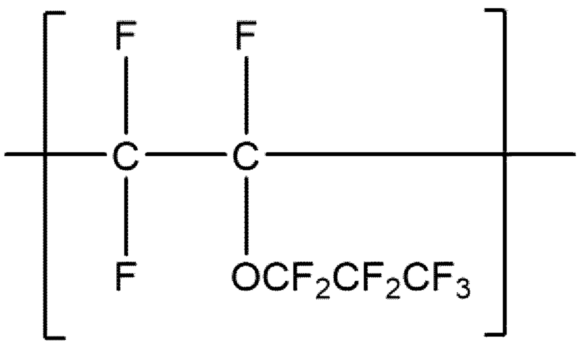

(9)

It is preferable that the polymer (C) contain a structural unit represented by the general formula (1) at a proportion of 75 to 90 mol% relative to the total amount of the polymer.

It is preferable that the polymer (C) have a structural unit represented by the general formula (20) at a proportion of 8.0 to 30.0 mol% relative to the total of the polymer. The lower limit is preferably 10.0 mol%, and the upper limit is preferably 25.0 mol%.

Further, the polymer (C) may be a polymer having another structural unit (C) other than the structural unit represented by the general formula (1) and the structural unit represented by the general formula (20), within a range not impairing the effects to the invention. The other structural unit (C) is contained at a proportion of preferably 90 mol% or less relative to the total amount of the polymer, while the other structural unit (A) may not be contained in the polymer which includes a structural unit represented by the general formula (1) and a structural unit represented by the general formula (20) only.

The other structural unit (C) is not limited, and any unsaturated polymerizable monomer that can be copolymerized may be used. Examples thereof include compounds represented by the general formula (2) other than the compound represented by the general formula (20), and chlorotrifluoroethylene, ethylene, propylene, alkyl vinyl ether, etc.

The polymer (C) has a glass transition temperature of 35°C or more. The polymer (C) made to have such a glass transition temperature is preferred, because properties suitable for use in various applications to be described in detail below can be obtained.

It is preferable that the polymer 3 of the present disclosure have a ratio F/H in the polymer of 50% (molar ratio) or more. With a molar ratio of less than 50%, the thermal decomposition temperature decreases, so that a gas is generated during molding the resin into a film, tube or the like, which may cause difficulties in molding. Further, the thermal decomposition causes undesirable coloring of the resin. The lower limit of the ratio F/H is more preferably 50% or more, still more preferably 55% or more. The upper limit of the ratio F/H is more preferably 95% (molar ratio), still more preferably 90%, and most preferably 80%.

The polymer 3 of the present disclosure has a weight average molecular weight of preferably 5,000 to 5,000,000. Within the range, preferred resistance to thermal decomposition and preferred molding processability can be achieved. The upper limit thereof is more preferably 3,000,000, still more preferably 2,000,000. The lower limit thereof is more preferably 8,000, still more preferably 10,000.

The polymer 3 of the present disclosure is made capable of being dissolved in a general-purpose solvent. As described above, the polymer having a structural unit represented by the general formula (1) has solubility in a general-purpose solvent. Accordingly, the polymer 3 made to have a structural unit represented by the general formula (1) at a high proportion can be dissolved in a general-purpose solvent. The general-purpose solvent is not limited, and examples thereof include acetone, methyl ethyl ketone, tetrahydrofuran, methyl isobutyl ketone, N,N-dimethylformamide, and N-methyl-2-pyrorridone.

The resin solution including the polymer 3 of the present disclosure dissolved in a general-purpose solvent preferably has a resin concentration of 1.0 to 10.0 mass%. The lower limit of the resin concentration is more preferably 2.0 mass%, still more preferably 2.5 mass%. The upper limit of the resin concentration is more preferably 9.0 mass%, still more preferably 8.0 mass%.

(Polymerization method)

The polymers 1 to 3 of the present disclosure can be obtained by polymerizing a monomer composition including a monomer represented by a following general formula (10) in partly or as a whole:

[Chemical Formula 20]

$$FHC{=}CHF \qquad (10)$$

The compound represented by the general formula (10) is a known compound, which can be produced, for example, by the method described in Patent Literature 1.

The polymerization is performed using a compound represented by the general formula (10) having a purity of, preferably 99.5 mass% or more. The purity is more preferably 99.8 mass% or more, still more preferably 99.9 mass% or more. The production method of the compound represented by the general formula (10) having a purity of 99.9 mass% or more is not limited, and examples thereof include preparative gas chromatography and multi-stage rectification.

Regarding the polymer 1, use of a high-purity monomer allows to obtain a polymer having a high glass transition temperature of 100°C or more, and such a polymer is novel as described above.

It is preferable that the polymers 2 and 3 be also obtained with use a monomer (10) having a purity of 99.9 mass% or more as raw material. Use of such a monomer can prevent problems caused by unintentional inclusion of structural units, such as failure in obtaining a specific resin, and failure in stably obtaining a resin having uniform physical properties.

Further, with use of a monomer represented by the general formula (10) with a large content of impurities, a copolymerization component is hardly taken in the copolymer, which causes a problem of failure in obtaining a desired resin. Specifically, in copolymerization with hexafluoropropylene, almost no hexafluoropropylene unit is taken in the polymer, according to Non Patent Literature 1. In contrast, according to an experiment performed by the present inventors, with use of a high-purity monomer as raw material, a copolymer of hexafluoropropylene and a monomer represented by the general formula (10) can be obtained.

As described above, it has been shown that with use of a high-purity monomer, disposition of the copolymerization is different in comparison to the case with use of a low-purity monomer. Thereby, a polymer with a novel composition

different from that of Non Patent Literature can be obtained.

The production method of the polymers 1 to 3 are not limited, including any commonly used polymerization method such as solution polymerization, emulsion polymerization, and suspension polymerization. The solvent, emulsifier, initiator, etc. for use in the polymerization are not limited, and commonly used known ones may be used.

The processing after polymerization is also performed by any commonly used method, and on an as needed basis, the resulting polymer may be dissolved in a general-purpose solvent to make a resin solution.

The fluorine-containing resin of the present disclosure can be suitably used in the fields such as optical material, building material, semiconductor-related material, display-related material, automobile material, ship material, aircraft material, power generation-related material, laminate, coating agent, and living ware/leisure articles.

Examples of the optical material include an optical component, spectacle lens, optical lens, optical cell, DVD disc, photo diode, anti-reflection material, and micro lens array.

Examples of the building material include a display window, a showcase, and a membrane material, roof material, ceiling material, exterior wall material, interior wall material, coating material of a membrane structure building (sports facilities, horticultural facilities, atrium, etc.). Further, examples thereof include not only a membrane material of a membrane structure building, but also a plate material for outdoor use such as noise barrier, wind-proof fence, wave overtopping protection fence, garage canopy, shopping mall, walkway wall, anti-shattering film for glass, heat-proof/waterproof sheet, tent material for tent warehouse, membrane material for shading, partial roof material for skylight, window material as substitute for glass, opening member as substitute for glass, membrane material for flame partition, curtain, exterior wall reinforcement, waterproof membrane, smoke barrier, incombustible transparent partition, road reinforcement, interior (lighting, wall surface, blind, etc.), exterior (tent, signboard, etc.), scale greenhouse, and membrane material (roof material, ceiling material, exterior wall material, interior wall material, etc.).

Examples of the electronic material include a wiring circuit board such as printed wiring circuit board and ceramic wiring circuit board, electronics material (printed circuit board, wiring circuit board, insulating membrane, releasing film, etc.), film capacitor, electronic/electric component, exterior of home appliances, and precision machined parts.

Examples of the semiconductor-related material include a protective film of semiconductor devices (for example, an interlayer insulating film, buffer coating film, passivation film, $\alpha$-ray shielding film, device sealing material, interlayer insulating film for high-density mounting boards, moisture-proof film for high-frequency devices (for example, moisture-proof film for RF circuit device, GaAs device, InP device, etc.)), a pellicle membrane, photolithography, and biochip.

Examples of the display-related material include a display, touch panel, surface protection film for various displays (for example, PDP, LCD, FED, organic EL, and projection TV), surface for electrowetting, and image forming article. Examples of the automobile material include a hood, damping material, and body.

Examples of the power generation-related material include a solar cell, intermediate of electrolyte material for solid polymer-type fuel cells, electrostatic induction-type transducing device (for example, vibration-type generator, actuator, sensor, etc.), electret used for electrostatic induction-type transducing device such as generation unit and microphone, surface material of solar cell module, mirror protection material for solar thermal power generation, surface material for solar water heater, and photovoltaic device. Examples of the laminate include a film laminated with thermoplastic resin such as polyimide.

Examples of the coating agent include water-repellent coating, mold release agent, low-reflection coating, antifouling coating, non-stick coating, waterproof/moisture-proof coating, insulating film, chemical resistant coating, etching protection film, low-refractive index film, ink-repelling coating, gas barrier film, patterned functional film, surface protection film of color filter for display, anti-fouling/anti-reflection film for solar cell cover glass, anti-fouling/anti-reflection coating of deliquescent crystal and phosphate-based glass, surface protection/anti-fouling coating of phase shift mask and photo mask, liquid-repellent coating of photo resist for immersion lithography, mold release coating of contact lithography mask, mold release coating of nano-imprint mold, passivation film of semiconductor device and integrated circuit, gas-barrier film of silver electrode of circuit board and light emitting device such as LED, liquid crystal orientation film of liquid crystal display device, lubrication coating of magnetic recording medium, gate insulating film, device with use of electrowetting principle, electret film, chemical resistant coating of MEMS process, anti-fouling coating of medical equipment, chemical resistant/anti-fouling/bio-resistant/liquid repellent coating of device using microfluidics, low-refractive material of multi-layered coating of optical filter, water-repellent material for hydrophilic/water-repellent patterning, and patterned optical device.

Examples of the living ware/leisure articles include a fishing rod, racket, golf club, and projection screen.

## Examples

The present disclosure will be specifically described with reference to Examples as follows. In the following Examples, "part" and "%" represent "part by mass" and "mass%", respectively, unless otherwise specified.

(Monomer represented by general formula (10))

The (E-)1,2-difluoroethylene for use in each of the following Examples had a purity of 99.9 mass% or more. Incidentally, the purity was determined as 99.9 mass% when no peak of impurities was identified by GC/MS. The high-purity monomer was obtained by production according to Examples in Patent Literature 1, and separation by preparative gas chromatography.

(Polymerization method)

A polymer was synthesized by a polymerization method according to each of the following synthesis examples.
The resulting polymer was evaluated based on the following criteria.

(Solubility in acetone)

To 1 g of a resin obtained from each of the synthesis examples, 9 g of acetone was added and stirred with a stirrer. In the case where no residue was identified after 1 hour, dissolution was presumed to be accomplished.

(Composition analysis)

The copolymer composition was measured by solution NMR or melt NMR.

<Solution NMR>

Measurement apparatus: VNMRS 400 manufactured by Varian, resonance frequency: 376.04 (Sfrq), pulse width: 30°

<Melt NMR>

Measurement apparatus: AVANCE 300 manufactured by Bruker Japan K.K., resonance frequency: 282.40 [MHz], pulse width: 45°

((Molecular weight) Number average molecular weight (Mn) and Weight average molecular weight (Mw))

Based on the results measured by GPC method, the molecular weight was calculated using standard polystyrene as reference. The measurement was performed by the following method, depending on the type of polymers.

GPC apparatus: TOSOH HLC-8020, Column: two Shodex GPC 806M, and each one of GPC 801 and 802
Developing solvent: tetrahydrofuran (THF)
Sample concentration: 0.1 mass%
Measurement temperature: 40°C
GPC apparatus: TOSOH AS-8010, CO-8020 and SIMADZURID-10A
Column: three GMHHR-H
Developing solvent: dimethylformamide (DMF)
Sample concentration: 0.05 mass%
Measurement temperature: 40°C

(Differential scanning calorimetry (DSC))

With use of a differential scanning calorimeter (DSC 822e manufactured by Mettler Toledo), 10 mg of a sample was heated at 10°C/min to obtain a DSC curve, and the temperature that shows the point of intersection between an extension line of the base line around the secondary transition of the DSC curve and a tangent at the inflection point of the DSC curve was defined as glass transition temperature.

(Degree of crystallinity)

Powder of the copolymer was subjected to compression molding at 150°C to obtain a molded article in a sheet form having a thickness of 0.2 mm.
The resulting molded article in a sheet form was measured under the following conditions with use of a full-automatic multi-purpose X-ray diffraction apparatus (SmartLab manufactured by Rigaku Corporation). Measurement angle: 10 to 30° (light source: Cu/Kα, wavelength: 1.5418 Angstrom).

Further, peak tops having a full width half maximum of 2 or more at 17.0 to 18.5° were defined as amorphous part, and other peak tops were defined as crystalline part. After waveform separation of each of the peaks, the degree of crystallinity was calculated based on each of the peak areas according to the following formula (1).

$$\text{Degree of crystallinity (\%)} = \text{Crystalline part} / (\text{Crystalline part} + \text{Amorphous part}) \times 100 \quad (1)$$

Polymer synthesis example 1

Into an autoclave having an internal volume of 1.8 liter, 1,330 g of deionized water and 0.67 g of methylcellulose were introduced, and the inside of the autoclave was then sufficiently replaced with vacuum/nitrogen. The inside of the autoclave was then vacuum degassed to achieve a vacuum state, and 250 g of (E-)1,2-difluoroethylene, 1 ml of methanol, and 2 g of di-normal propylperoxy dicarbonate introduced into the autoclave were heated to 45°C over 1.5 hours. The mixture was maintained at 45°C for 3 hours, and then 4 g of di-normal propylperoxy dicarbonate was further introduced therein. The temperature was then maintained at 45°C for 4 hours. The maximum reached pressure during that period was 2.7 MPaG. The pressure was then discharged back to atmospheric pressure, and the reaction product was washed with water and dried to obtain 198 g of fluorine resin powder.

The melting point was 196.3°C.

Polymer synthesis example 2

The inside of an autoclave having an internal volume of 0.5 liter was sufficiently replaced with vacuum/nitrogen. The inside of the autoclave was then vacuum degassed to achieve a vacuum state, and 150 g of HFE-347pc-f, 23 g of (E-)1,2-difluoroethylene, and 4 g of tetrafluoroethylene were introduced into the autoclave. The autoclave was then heated to 28°C. Subsequently, 2.0 g of a perfluorohexane solution containing 8 mass% of di-(2,2,3,3,4,4,5,5,6,6,7,7-dodecafluoroheptanoyl)peroxide (DHP-H) was fed into the autoclave to initiate polymerization. The polymerization pressure at the initiation was 0.5 MPaG. In order to maintain the polymerization pressure, a mixed gas of (E-)1,2-difluoroethylene/tetrafluoroethylene=85/15 mol was circulated. The temperature in the autoclave was maintained at 28°C for 5 hours 15 minutes, and the pressure was then discharged back to atmospheric pressure. The reaction product was washed with water and dried to obtain 12.2 g of a fluorine resin powder. The resulting resin contained (E-)1,2-difluoroethylene and tetrafluoroethylene at a molar ratio of 85.5/14.5. The melting point was 210. 0°C.

Polymer synthesis example 3

Into an autoclave having an internal volume of 1.8 liter, 915 g of deionized water and 0.46 g of methylcellulose were introduced, and the inside of the autoclave was then sufficiently replaced with vacuum/nitrogen. The inside of the autoclave was then vacuum degassed to achieve a vacuum state, and 458 g of perfluoro octacyclobutane, 38 g of (E-)1,2-difluoroethylene, and 38 g of trifluoroethylene were introduced into the autoclave. The autoclave was then heated to 34°C. Then, 3.0 g of di-normal propylperoxy carbonate and 1 ml of methanol were fed into the autoclave to initiate polymerization. The polymerization pressure at the initiation was 1.1 MPaG. The temperature in the autoclave was maintained at 35°C for 5 hours. The pressure was then discharged back to atmospheric pressure, and the reaction product was washed with water and dried to obtain 9.6 g of fluorine resin powder. The resulting resin contained (E-)1,2-difluoroethylene and trifluoroethylene at a molar ratio of 64.4/35.6.

The melting point was 205.6°C.

Polymer synthesis example 4

Into an autoclave having an internal volume of 1.8 liter, 915 g of deionized water and 0.46 g of methylcellulose were introduced, and the inside of the autoclave was then sufficiently replaced with vacuum/nitrogen. The inside of the autoclave was then vacuum degassed to achieve a vacuum state, and 458 g of perfluoro octacyclobutane, 17 g of (E-)1,2-difluoroethylene, and 66 g of vinylidene fluoride were introduced into the autoclave. The autoclave was then heated to 35°C. Then, 3.0 g of di-normal propylperoxy carbonate and 1 ml of methanol were fed into the autoclave to initiate polymerization. The polymerization pressure at the initiation was 1.5 MPaG. In order to maintain the polymerization pressure, a mixed gas of (E-)1,2-difluoroethylene/vinylidene fluoride=43/57 mol was circulated. The temperature in the autoclave was maintained at 35°C for 18 hours, and the pressure was then discharged back to atmospheric pressure.

The reaction product was washed with water and dried to obtain 39 g of a fluorine resin powder.

The resulting resin contained (E-)1,2-difluoroethylene and vinylidene fluoride at a molar ratio of 42.9/57.1. The melting point was 168.6°C.

Polymer synthesis example 5

A 100-ml autoclave made of stainless steel (SUS) was charged with 40 g of dichloro pentafluoropropane (R-225) and 0.52 g of DHP-H, cooled to dry-ice temperature, purged with nitrogen, and then charged with 6.0 g of vinylidene fluoride (VdF) and 1.3 g of (E-)1,2-difluoroethylene. The mixture was shaken at 25°C for 12.4 hours with a shaker. The product was dried to obtain 1.20 g of a fluorine resin. The resulting resin contained (E-)1,2-difluoroethylene and VdF at a molar ratio of 42.9/57.1.

The melting point was 163.6°C.

Polymer synthesis example 6

A 100-ml autoclave made of stainless steel (SUS) was charged with 40 g of R-225 and 0.43 g of DHP-H, cooled to dry-ice temperature, purged with nitrogen, and then charged with 3.0 g of VdF and 9.1 g of (E-)1,2-difluoroethylene. The mixture was shaken at 25°C for 11.8 hours with a shaker. The product was dried to obtain 1.81 g of a fluorine resin. The resulting resin contained (E-)1,2-difluoroethylene and VdF at a molar ratio of 96.5/3.5.

The melting point was 205.9°C.

Polymer synthesis example 7

A 100-ml autoclave made of stainless steel (SUS) was charged with 40 g of R-225 and 0.43 g of DHP-H, cooled to dry-ice temperature, purged with nitrogen, and then charged with 20.9 g of 2,3,3,3-tetrafluoropropene (HFO-1234yf) and 3.8 g of (E-)1,2-difluoroethylene. The mixture was shaken at 25°C for 13.2 hours with a shaker. The product was dried to obtain 1.23 g of a fluorine resin. The resulting resin contained (E-)1,2-difluoroethylene and HFO-1234yf at a molar ratio of 16.3/83.7.

No melting point was observed.

Polymer synthesis example 8

A 100-ml autoclave made of stainless steel (SUS) was charged with 40 g of R-225 and 0.43 g of DHP-H, cooled to dry-ice temperature, purged with nitrogen, and then charged with 8.0 g of HFO-1234yf and 12.5 g of (E-)1,2-difluoroethylene. The mixture was shaken at 25°C for 13.2 hours with a shaker. The product was dried to obtain 0.93 g of a fluorine resin. The resulting resin contained (E-)1,2-difluoroethylene and HFO-1234yf at a molar ratio of 46.4/53.6.

No melting point was observed.

Polymer synthesis example 9

The inside of an autoclave having an internal volume of 0.5 liter was sufficiently replaced with vacuum/nitrogen. The inside of the autoclave was then vacuum degassed to achieve a vacuum state, and 150 g of HFE-347pc-f, 23 g of (E-)1,2-difluoroethylene, and 4 g of tetrafluoroethylene were introduced into the autoclave. The autoclave was then heated to 28°C. Subsequently, 1.8 g of DHP-H was fed into the autoclave to initiate polymerization. The polymerization pressure at the initiation was 0.5 MPaG. In order to maintain the polymerization pressure, a mixed gas of (E-)1,2-difluoroethylene/tetrafluoroethylene=68/32 mol was circulated. The temperature in the autoclave was maintained at 28°C for 4 hours, and the pressure was then discharged back to atmospheric pressure. The reaction product was washed with water and dried to obtain 10.8 g of a fluorine resin powder. The resulting resin contained (E-)1,2-difluoroethylene and tetrafluoroethylene at a molar ratio of 67.8/32.2. The melting point was 217.2°C.

Polymer synthesis example 10

A 100-ml autoclave made of stainless steel (SUS) was charged with 40 g of R-225 and 0.43 g of DHP-H, cooled to dry-ice temperature, purged with nitrogen, and then charged with 15.0 g of trifluoromethyl trifluorovinyl ether (PMVE) and 1.3 g of (E)-1,2-difluoroethylene. The mixture was shaken at 25°C for 13.2 hours with a shaker. The product was dried to obtain 0.41 g of a fluorine resin. The resulting resin contained E-form and PMVE at a molar ratio of 29.8/70.2.

No melting point was observed.

Polymer synthesis example 11

A 100-ml autoclave made of stainless steel (SUS) was charged with 40 g of R-225 and 0.42 g of DHP-H, cooled to dry-ice temperature, purged with nitrogen, and then charged with 6.0 g of PMVE and 10.2 g of (E-)1,2-difluoroethylene. The mixture was shaken at 25°C for 13.2 hours with a shaker. The product was dried to obtain 3.0 g of a fluorine resin. The resulting resin contained E-form and PMVE at a molar ratio of 95.3/4.5.

The melting point was 173.3°C.

Polymer synthesis example 12

A 100-ml autoclave made of stainless steel (SUS) was charged with 40 g of R-225 and 0.43 g of DHP-H, cooled to dry-ice temperature, purged with nitrogen, and then charged with 12.7 g of hexafluoropropylene (HFP) and 1.3 g of (E-)1,2-difluoroethylene. The mixture was shaken at 25°C for 13.0 hours with a shaker. The product was dried to obtain 0.13 g of a fluorine resin. The resulting resin contained (E-)1,2-difluoroethylene and HFP at a molar ratio of 84.1/15.9.

No melting point was observed.

Polymer synthesis example 13

A 100-ml autoclave made of stainless steel (SUS) was charged with 40 g of R-225 and 0.43 g of DHP-H, cooled to dry-ice temperature, purged with nitrogen, and then charged with 3.0 g of HFP and 5.2 g of (E-)1,2-difluoroethylene. The mixture was shaken at 25°C for 13.0 hours with a shaker. The product was dried to obtain 2.41 g of a fluorine resin. The resulting resin contained (E-)1,2-difluoroethylene and HFP at a molar ratio of 99.2/0.8.

The melting point was 188.5°C.

Polymer synthesis example 14

A 0.5-L autoclave made of stainless steel was charged with 250 ml of pure water, 30 g of t-butyl alcohol, and 0.025 g of polyacrylic acid, purged with nitrogen, and slightly pressurized with (E-)1,2-difluoroethylene. The temperature was controlled to 80°C while stirring at 1000 rpm, and (E-)1,2-difluoroethylene was injected to 2.000 MPa. Therein, 0.077 g of ammonium persulfate dissolved in 3 ml of pure water was injected with nitrogen. Every time when the pressure decreased to 1.99 MPa, introduction of (E-)1,2-difluoroethylene to 2.01 MPa was repeated. After 2 hours 16 minutes, when 20 g of (E-)1,2-difluoroethylene was fed, gas in the autoclave was discharged and cooled to collect 305 g of dispersion.

The solid content of the dispersion was 6.6 mass% (amount of polymer: 20.1 g). The dispersion was dried to obtain 19 g of fluorine resin. The melting point was 191.7°C.

Polymer synthesis example 15

Into an autoclave having an internal volume of 1.8 liter, 600 g of deionized water and 0.3 g of methylcellulose were introduced, and the inside of the autoclave was then sufficiently replaced with vacuum/nitrogen. The inside of the autoclave was then vacuum degassed to achieve a vacuum state, and 450 g of hexafluoropropylene and 100 g of (E-)1,2-difluoroethylene were introduced into the autoclave. The autoclave was then heated to 35°C. Then, 6.0 g of di-normal propyl peroxycarbonate was fed into the autoclave to initiate polymerization. The polymerization pressure at the initiation was 1.5 MPaG. After maintaining the temperature in the autoclave at 35°C for 7 hours, the pressure was discharged back to atmospheric pressure. The reaction product was washed with water and dried to obtain 17 g of a fluorine resin powder. The resulting resin contained (E-)1,2-difluoroethylene and HFP at a molar ratio of 90.3/9.7.

No melting point was observed.

Polymer synthesis example 16

Into an autoclave having an internal volume of 1.8 liter, 915 g of deionized water and 0.458 g of methylcellulose were introduced, and the inside of the autoclave was then sufficiently replaced with vacuum/nitrogen. The inside of the autoclave was then vacuum degassed to achieve a vacuum state, and 458 g of perfluoro octacyclobutane, 7.5 g of HFO-1234yf, and 80 g of (E-)1,2-difluoroethylene was introduced into the autoclave. The autoclave was then heated to 35°C. Then, 3.0 g of di-normal propyl peroxycarbonate was fed into the autoclave to initiate polymerization. The polymerization pressure at the initiation was 1.18 MPaG. In order to maintain the polymerization pressure, a mixed gas of (E-)1,2-difluoroethylene/HFO-1234yf=85/15 mol was circulated. The temperature in the autoclave was maintained at 35°C for 16 hours, and the pressure was then discharged back to atmospheric pressure. The reaction product was washed with

water and dried to obtain 78 g of a fluorine resin powder. The resulting resin contained (E-)1,2-difluoroethylene and HFO-1234yf at a molar ratio of 84.3/15.7.

No melting point was observed.

Polymer synthesis example 17

A 100-ml autoclave made of stainless steel (SUS) was charged with 40 g of R-225 and 0.43 g of DHP-H, cooled to dry-ice temperature, purged with nitrogen, and then charged with 8.9 g of PMVE and 3.3 g of (E-)1,2-difluoroethylene. The mixture was shaken at 25°C for 10.5 hours with a shaker. The product was dried to obtain 0.33 g of a fluorine resin. The resulting resin contained (E-)1,2-difluoroethylene and PMVE at a molar ratio of 74.9/25.1.

No melting point was observed.

Polymer synthesis example 18

Into an autoclave having an internal volume of 1.8 liter, 600 g of deionized water and 0.3 g of methylcellulose were introduced, and the inside of the autoclave was then sufficiently replaced with vacuum/nitrogen. The inside of the autoclave was then vacuum degassed to achieve a vacuum state, and 150 g of perfluoro octacyclobutane, 100 g of hexafluoropropylene, and 64 g of (E-)1,2-difluoroethylene were introduced into the autoclave. The autoclave was then heated to 35°C. Then, 1.5 g of di-normal propyl peroxycarbonate was fed into the autoclave to initiate polymerization. The polymerization pressure at the initiation was 1.16 MPaG. After maintaining the temperature in the autoclave at 35°C for 7 hours, the pressure was discharged back to atmospheric pressure. The reaction product was washed with water and dried to obtain 17 g of a fluorine resin powder. The resulting resin contained (E-)1,2-difluoroethylene and HFP at a molar ratio of 94.9/5.1.

The melting point was 151.2°C.

Polymer synthesis example 19

Into an autoclave having an internal volume of 1.8 liter, 915 g of deionized water and 0.458 g of methylcellulose were introduced, and the inside of the autoclave was then sufficiently replaced with vacuum/nitrogen. The inside of the autoclave was then vacuum degassed to achieve a vacuum state, and 458 g of perfluoro octacyclobutane, 2 g of HFO-1234yf, and 64 g of (E-)1,2-difluoroethylene were introduced into the autoclave. The autoclave was then heated to 35°C. Then, 3.0 g of di-normal propyl peroxycarbonate was fed into the autoclave to initiate polymerization. The polymerization pressure at the initiation was 0.96 MPaG. After maintaining the temperature in the autoclave at 35°C for 6 hours, the pressure was discharged back to atmospheric pressure. The reaction product was washed with water and dried to obtain 2.7 g of a fluorine resin powder. The resulting resin contained (E-)1,2-difluoroethylene and HFO-1234yf at a molar ratio of 96.9/3.1.

The melting point was 170.7°C.

Polymer synthesis example 20

A 100-ml autoclave made of stainless steel (SUS) was charged with 40 g of R-225 and 0.43 g of DHP-H, cooled to dry-ice temperature, purged with nitrogen, and then charged with 9.7 g of PMVE and 2.6 g of (E-)1,2-difluoroethylene. The mixture was shaken at 25°C for 5.5 hours with a shaker. The product was dried to obtain 0.53 g of a fluorine resin. The resulting resin contained (E-)1,2-difluoroethylene and PMVE at a molar ratio of 73.1/26.9.

No melting point was observed.

Polymer synthesis example 21

A 100-ml autoclave made of stainless steel (SUS) was charged with 40 g of R-225 and 0.43 g of DHP-H, cooled to dry-ice temperature, purged with nitrogen, and then charged with 11.6 g of $PMVE_2$ and 1.9 g of (E-)1,2-difluoroethylene. The mixture was shaken at 25°C for 5.5 hours with a shaker. The product was dried to obtain 0.69 g of a fluorine resin. The resulting resin contained (E-)1,2-difluoroethylene and PMVE at a molar ratio of 60.3/39.7.

No melting point was observed.

Polymer synthesis example 22

A 100-ml autoclave made of stainless steel (SUS) was charged with 40 g of R-225 and 0.43 g of DHP-H, cooled to dry-ice temperature, purged with nitrogen, and then charged with 93.5 g of PMVE and 5.4 g of (E-)1,2-difluoroethylene.

The mixture was shaken at 25°C for 5.5 hours with a shaker. The product was dried to obtain 0.65 g of a fluorine resin. The resulting resin contained (E-)1,2-difluoroethylene and PMVE at a molar ratio of 88.5/11.5.
No melting point was observed.

Polymer synthesis example 23

The inside of an autoclave having an internal volume of 0.5 liter was sufficiently replaced with vacuum/nitrogen. The inside of the autoclave was then vacuum degassed to achieve a vacuum state, and 150 g of 1,1,2,2-tetrafluoroethyl-2,2,2-trifluoroethyl ether (HFE-347pc-f), 9.4 g of (E-)1,2-difluoroethylene, and 15 g of tetrafluoroethylene were introduced into the autoclave. The autoclave was then heated to 28°C. Then, 1.5 g of DHP-H was fed into the autoclave to initiate polymerization. The polymerization pressure at the initiation was 0.5 MPaG. In order to maintain the polymerization pressure, a mixed gas of (E-)1,2-difluoroethylene/tetrafluoroethylene=54/46 mol was circulated. The temperature in the autoclave was maintained at 28°C for 2 hours 45 minutes, and the pressure was then discharged back to atmospheric pressure. The reaction product was washed with water and dried to obtain 10.7 g of a fluorine resin powder. The resulting resin contained (E-)1,2-difluoroethylene and tetrafluoroethylene at a molar ratio of 53.9/46.1. The melting point was 232.8°C.

Polymer synthesis example 24

The inside of an autoclave having an internal volume of 0.5 liter was sufficiently replaced with vacuum/nitrogen. The inside of the autoclave was then vacuum degassed to achieve a vacuum state, and 150 g of HFE-347pc-f, 6.8 g of (E-)1,2-difluoroethylene, and 20 g of tetrafluoroethylene were introduced into the autoclave. The autoclave was then heated to 28°C. Then, 1.5 g of DHP-H was fed into the autoclave to initiate polymerization. The polymerization pressure at the initiation was 0.5 MPaG. In order to maintain the polymerization pressure, a mixed gas of (E-)1,2-difluoroethylene/tetrafluoroethylene=42/58 mol was circulated. The temperature in the autoclave was maintained at 28°C for 1 hour 50 minutes, and the pressure was then discharged back to atmospheric pressure. The reaction product was washed with water and dried to obtain 13.1 g of a fluorine resin powder. The resulting resin contained (E-)1,2-difluoroethylene and tetrafluoroethylene at a molar ratio of 42.4/57.6. The melting point was 246.5°C.

Polymer synthesis example 25

A 100-ml autoclave made of stainless steel (SUS) was charged with 40 g of HFE-347pc-f and 0.86 g of DHP-H, cooled to dry-ice temperature, purged with nitrogen, and then charged with 4.9 g of VdF and 8.3 g of (E-)1,2-difluoroethylene. The mixture was shaken at 25°C for 2 hours 30 minutes with a shaker. The product was dried to obtain 2.0 g of a fluorine resin. The resulting resin contained (E-)1,2-difluoroethylene and VdF at a molar ratio of 92.4/7.6.
The melting point was 203.5°C.

Polymer synthesis example 26

A 100-ml autoclave made of stainless steel (SUS) was charged with 40 g of HFE-347pc-f and 0.86 g of DHP-H, cooled to dry-ice temperature, purged with nitrogen, and then charged with 5.1 g of VdF and 7.8 g of (E-)1,2-difluoroethylene. The mixture was shaken at 25°C for 1 hours 54 minutes with a shaker. The product was dried to obtain 1.2 g of a fluorine resin. The resulting resin contained (E-)1,2-difluoroethylene and VdF at a molar ratio of 85.7/14.3.
The melting point was 201.4°C.

Polymer synthesis example 27

A 100-ml autoclave made of stainless steel (SUS) was charged with 40 g of HFE-347pc-f and 0.86 g of DHP-H, cooled to dry-ice temperature, purged with nitrogen, and then charged with 5.8 g of VdF and 7.2 g of (E-)1,2-difluoroethylene. The mixture was shaken at 25°C for 2 hours 35 minutes with a shaker. The product was dried to obtain 2.0 g of a fluorine resin. The resulting resin contained (E-)1,2-difluoroethylene and VdF at a molar ratio of 75.5/24.5.
The melting point was 195.2°C.

Polymer synthesis example 28

A 100-ml autoclave made of stainless steel (SUS) was charged with 40 g of HFE-347pc-f and 0.86 g of DHP-H, cooled to dry-ice temperature, purged with nitrogen, and then charged with 12.2 g of VdF and 4.0 g of (E-)1,2-difluoroethylene. The mixture was shaken at 25°C for 2 hours 30 minutes with a shaker. The product was dried to obtain

2.4 g of a fluorine resin. The resulting resin contained (E-)1,2-difluoroethylene and VdF at a molar ratio of 53.3/46.7.

The melting point was 182.5°C.

Polymer synthesis example 29

A 100-ml autoclave made of stainless steel (SUS) was charged with 40 g of HFE-347pc-f and 0.86 g of DHP-H, cooled to dry-ice temperature, purged with nitrogen, and then charged with 12.5 g of VdF and 1.1 g of (E-)1,2-difluoroethylene. The mixture was shaken at 25°C for 2 hours 35 minutes with a shaker. The product was dried to obtain 2.2 g of a fluorine resin. The resulting resin contained (E-)1,2-difluoroethylene and VdF at a molar ratio of 29.2/70.8.

The melting point was 163.6°C.

Polymer synthesis example 30

A 100-ml autoclave made of stainless steel (SUS) was charged with 40 g of HFE-347pc-f and 0.86 g of DHP-H, cooled to dry-ice temperature, purged with nitrogen, and then charged with 12.7 g of VdF and 0.6 g of (E-)1,2-difluoroethylene. The mixture was shaken at 25°C for 1 hours 53 minutes with a shaker. The product was dried to obtain 3.4 g of a fluorine resin. The resulting resin contained (E-)1,2-difluoroethylene and VdF at a molar ratio of 15.7/84.3.

The melting point was 161.8°C.

Polymer synthesis example 31

The inside of an autoclave having an internal volume of 0.5 liter was sufficiently replaced with vacuum/nitrogen. The inside of the autoclave was then vacuum degassed to achieve a vacuum state, and 150 g of HFE-347pc-f, 2.1 g of (E-)1,2-difluoroethylene, and 26 g of tetrafluoroethylene were introduced into the autoclave. The autoclave was then heated to 28°C. Then, 1.0 g of DHP-H was fed into the autoclave to initiate polymerization. The polymerization pressure at the initiation was 0.60 MPaG. In order to maintain the polymerization pressure, a mixed gas of (E-)1,2-difluoroethylene/tetrafluoroethylene=18/82 mol was circulated. The temperature in the autoclave was maintained at 28°C for 45 minutes, and the pressure was then discharged back to atmospheric pressure. The reaction product was washed with water and dried to obtain 11.3 g of a fluorine resin powder. The resulting resin contained (E-)1,2-difluoroethylene and tetrafluoroethylene at a molar ratio of 19.0/81.0. The melting point was 288.8°C.

[Table 1]

| Synthesis example | Copolymerization component | Copolymerization proportion (mol%) | Tg | Solubility in acetone | GPC | |  Degree of crystallinity |
|---|---|---|---|---|---|---|---|
| | | | | | Developing solvent | Molecular weight (Mw) | |
| 1 | - | 0 | 113.0 | Good | THF | 550000 | 22 |
| 2 | TFE | 14.5 | 99.1 | Good | DMF | 720000 | 36 |
| 3 | Trifluoroethylene | 35.6 | 78.1 | Good | THF | 116000 | 45 |
| 4 | VdF | 57.1 | 30.1 | Good | THF | 47000 | 23 |
| 5 | VdF | 57.1 | 30.2 | Good | THF | 39000 | 23 |
| 6 | HFO-1234yf | 3.5 | 86.2 | Good | THF | 131000 | 32 |
| 7 | HFO-1234yf | 83.7 | 46.1 | Good | THF | 59000 | 0 |
| 8 | HFO-1234yf | 53.6 | 49.4 | Good | THF | 79000 | 0 |
| 9 | TFE | 32.2 | 83.0 | Good | DMF | 890000 | 33 |
| 10 | PMVE | 70.2 | -0.4 | Good | THF | 16000 | 0 |
| 11 | PMVE | 4.5 | 87.9 | Good | THF | 115000 | 25 |
| 12 | HFP | 15.9 | 30.9 | Good | THF | 7000 | 0 |
| 13 | HFP | 0.8 | 106.0 | Good | THF | 174000 | 42 |
| 14 | - | 0 | 112.4 | Good | THF | 92000 | 22 |
| 15 | HFP | 9.7 | 87.4 | Good | THF | 47000 | 0 |
| 16 | HFP-1234yf | 15.7 | 78.7 | Good | THF | 306000 | 0 |
| 17 | PMVE | 25.1 | 35.4 | Good | THF | 30000 | 0 |
| 18 | HFP | 5.1 | 90.1 | Good | THF | 72000 | 20 |
| 19 | HFP-1234yf | 3.1 | 89.6 | Good | THF | 52000 | 35 |
| 20 | PMVE | 26.9 | 34.2 | Good | THF | 21000 | 0 |
| 21 | PMVE | 39.7 | 20.8 | Good | THF | 25000 | 0 |
| 22 | PMVE | 11.5 | 64.6 | Good | THF | 16000 | 0 |
| 23 | TFE | 46.1 | 74.1 | Good | DMF | 900000 | 42 |
| 24 | TFE | 57.6 | 74.0 | Good | DMF | 990000 | 46 |
| 25 | VdF | 7.6 | 101.1 | Good | THF | 242000 | 39 |
| 26 | VdF | 14.3 | 89.4 | Good | THF | 223000 | 41 |
| 27 | VdF | 24.5 | 79.8 | Good | THF | 34000 | 35 |
| 28 | VdF | 46.7 | 32.8 | Good | THF | 191000 | 45 |
| 29 | VdF | 70.8 | -10.6 | Good | DMF | 210000 | 66 |
| 30 | VdF | 84.3 | -24.7 | Poor | DMF | 195000 | 55 |
| 31 | TFE | 81.0 | 96.1 | Poor | — | — | 51 |

From the results in Table 1, it is clear that the polymers having a structural unit represented by the general formula (1) in Synthesis examples 1 to 29 have solubility in acetone. It is also clear that the polymer in Synthesis example 30 has solubility in DMF. Further, it is also preferable that a resin having a high Tg can be obtained with use of a high-purity monomer (Synthesis example 1).

Further, it has been shown that an amorphous resin is obtained with use of copolymerization components at

a specific proportion. Further, an amorphous resin having a glass transition temperature of 35°C or higher can also be suitably obtained.

Further, as shown in Synthesis example 31, although a copolymer with TFE, having a low copolymerization proportion of 1,2-difluoroethylene, has no solubility in a general-purpose solvent, such a polymer is excellent in chemical resistance. Accordingly, the polymer can be suitably used for applications requiring chemical resistance.

Industrial Applicability

The fluorine polymer of the present disclosure can be used for various applications where a fluorine resin is used. The fluorine polymer of the present disclosure can be particularly preferably used for applications where use of a general-purpose solvent is preferred.

## Claims

1. A fluorine-containing polymer comprising a structural unit represented by a following general formula (1) partly or as a whole, wherein the fluorine-containing polymer has a glass transition temperature of 100°C or more:

[Chemical Formula 1]

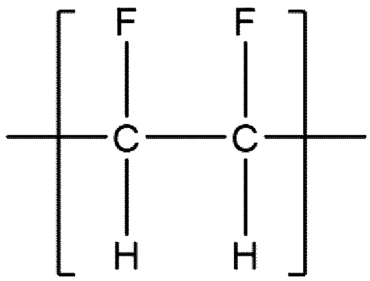

(1)

2. The fluorine-containing polymer according to claim 1, having a weight average molecular weight of 5,000 to 5,000,000.

3. A fluorine-containing polymer comprising a structural unit represented by a following general formula (1) and a structural unit represented by a following general formula (2) :

[Chemical Formula 2]

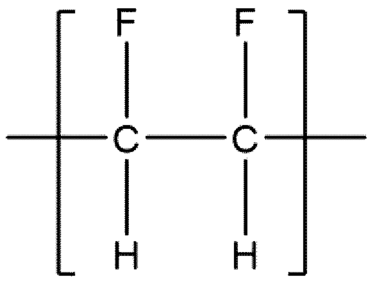

(1)

[Chemical Formula 3]

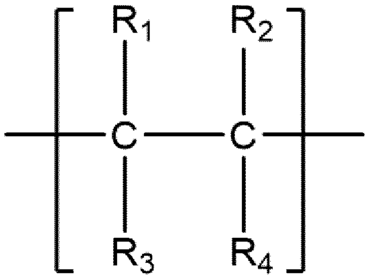

(2)

wherein $R_1$ is hydrogen, fluorine, a partly or wholly fluorinated hydrocarbon group having 5 or less carbon atoms, or an $OR_5$ group, wherein the $R_5$ group is a partly or wholly fluorinated hydrocarbon group having 5 or less carbon atoms, and $R_2$, $R_3$ and $R_4$ are each independently hydrogen or fluorine.

**4.** The fluorine-containing polymer according to claim 3, wherein the structural unit represented by the general formula (2) is at least one structural unit selected from the group consisting of structural units represented by following general formulas (3) to (8):

[Chemical Formula 4]

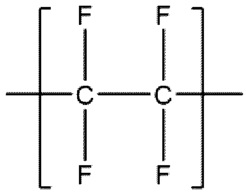

(3)

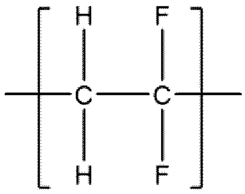

(4)

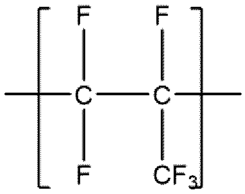

(5)

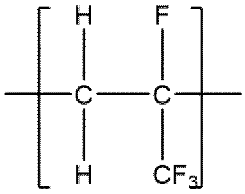

(6)

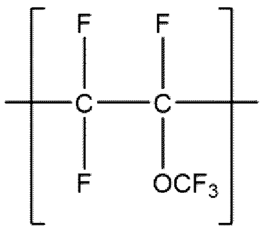

(7)

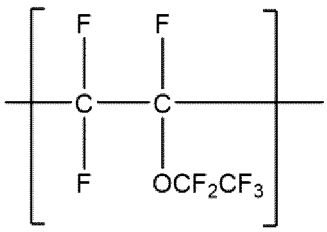

(8)

**5.** The fluorine-containing polymer according to claim 3 or 4, having a weight average molecular weight of 5,000 to 5,000,000.

**6.** A fluorine-containing polymer comprising a structural unit represented by a following general formula (1) partly or as a whole:

[Chemical Formula 5]

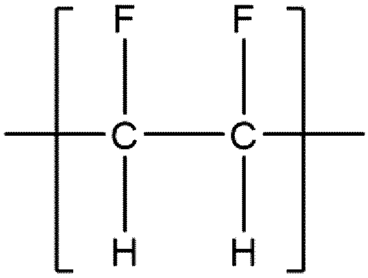

(1)

wherein the fluorine-containing polymer is amorphous.

7. The fluorine-containing polymer according to claim 6, comprising a structural unit represented by the general formula (1) and a structural unit derived from hexafluoropropylene, wherein the fluorine-containing polymer has a glass transition temperature of 35°C or more.

8. The fluorine-containing polymer according to claim 6 or 7, having a proportion of the structural unit represented by the general formula (1) of 70 to 92 mol%.

9. The fluorine-containing polymer according to claim 6, comprising a structural unit represented by the general formula (1) and a structural unit derived from at least an unsaturated compound selected from the group consisting of Ashrae Nos. 1225, 1234, 1243 and 1252, wherein the fluorine-containing polymer has a glass transition temperature of 35°C or more.

10. The fluorine-containing polymer according to claim 9, having a proportion of the structural unit represented by the general formula (1) of 0.1 to 92 mol%.

11. The fluorine-containing polymer according to claim 6, comprising a structural unit represented by the general formula (1) and a structural unit represented by a following general formula (20):

[Chemical Formula 6]

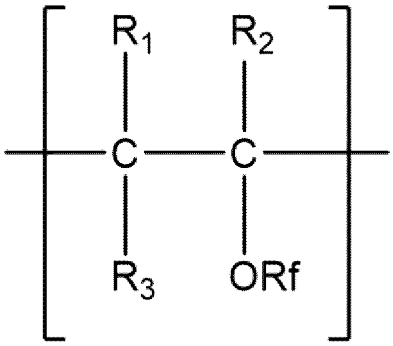

(20)

wherein $R_1$ to $R_3$ are selected from H and F, and Rf is a fluorine-containing alkyl group having 1 to 6 carbon atoms, wherein the fluorine-containing polymer has a glass transition temperature of 35°C or more.

12. The fluorine-containing polymer according to claim 11, wherein the structural unit represented by the general formula (20) is at least one of structural units represented by following general formulas (7) to (9):

[Chemical Formula 7]

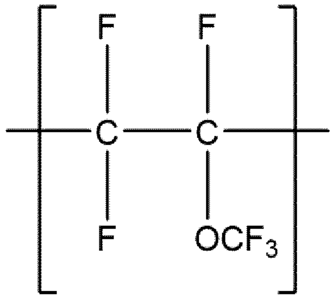

(7)

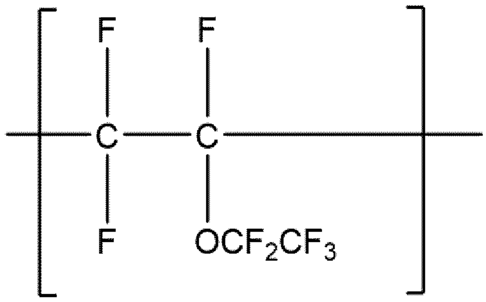

(8)

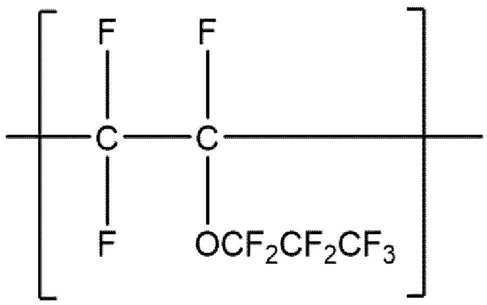

(9)

**13.** The fluorine-containing polymer according to claim 11 or 12, having a proportion of the structural unit represented by the general formula (1) of 70 to 92 mol%.

**14.** A resin solution comprising any of the polymers according to claims 1 to 13, which is dissolved in a general-purpose solvent.

**15.** A production method of the fluorine-containing polymer according to any one of claims 1 to 13, comprising: polymerizing a monomer composition including a monomer represented by a following general formula (10) partly or as a whole:

[Chemical Formula 8]

$FHC=CHF$ (10)

## INTERNATIONAL SEARCH REPORT

International application No.
PCT/JP2021/021764

A. CLASSIFICATION OF SUBJECT MATTER
Int. Cl. C08F14/18(2006.01)i
FI: C08F14/18

According to International Patent Classification (IPC) or to both national classification and IPC

B. FIELDS SEARCHED

Minimum documentation searched (classification system followed by classification symbols)
Int. Cl. C08C19/00-19/44, C08F6/00-246/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>A | CN 108102260 A (CYG ELECTRONICS (SHANGHAI) CO., LTD.) 01 June 2018 (2018-06-01), claims | 3-8, 10, 14-15<br>1-2, 9, 11-13 |
| X<br>A | CN 106633548 A (CHANGYUAN ELECTRONICS (DONGGUAN) CO., LTD.) 10 May 2017, (2017-05-10), claims | 3-8, 10, 14-15<br>1-2, 9, 11-13 |
| A | WO 2019/216239 A1 (DAIKIN INDUSTRIES, LTD.) 14 November 2019 (2019-11-14), entire text | 1-15 |
| A | JP 2003-519259 A (HYDRO QUEBEC) 17 June 2003 (2003-06-17), entire text | 1-15 |
| A | JP 57-109815 A (JAPAN SYNTHETIC RUBBER CO., LTD.) 08 July 1982 (1982-07-08), entire text | 1-15 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12.08.2021 | 24.08.2021 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.
PCT/JP2021/021764

C (Continuation). DOCUMENTS CONSIDERED TO BE RELEVANT

| Category* | Citation of document, with indication, where appropriate, of the relevant passages | Relevant to claim No. |
|---|---|---|
| A | JP 2012-512264 A (DAIKIN INDUSTRIES, LTD.) 31 May 2012 (2012-05-31), entire text | 1-15 |
| A | JP 2013-216915 A (DAIKIN INDUSTRIES, LTD.) 24 October 2013 (2013-10-24), entire text | 1-15 |

Form PCT/ISA/210 (continuation of second sheet) (January 2015)

**INTERNATIONAL SEARCH REPORT**
Information on patent family members

International application No.
PCT/JP2021/021764

| Patent Documents referred to in the Report | Publication Date | Patent Family | Publication Date |
|---|---|---|---|
| CN 108102260 A | 01.06.2018 | (Family: none) | |
| CN 106633548 A | 10.05.2017 | (Family: none) | |
| WO 2019/216239 A1 | 14.11.2019 | JP 2019-196312 A | |
| JP 2003-519259 A | 17.06.2003 | US 2003/0148158 A1<br>entire text<br>CA 2293846 A1 | |
| JP 57-109815 A | 08.07.1982 | US 4387203 A<br>entire text<br>DE 3151335 A<br>FR 2497208 A<br>CA 1201550 A | |
| JP 2012-512264 A | 31.05.2012 | US 2011/0269911 A1<br>entire text<br>EP 2597106 A1<br>CN 102341417 A | |
| JP 2013-216915 A | 24.10.2013 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019216239 A


### Non-patent literature cited in the description


- **W. S. DURRELL.** Poly(vinylene fluoride), Synthesis and Properties. *Journal of Polymer Science: Part A,* 1965, vol. 3, 2975-2982